# FASCICULE DE BREVET EUROPEEN

(11) **EP 2 862 437 B1**
(45) Date de publication et mention de la délivrance du brevet: **24.08.2016**
(21) Numéro de dépôt: 14188290.2
(22) Date de dépôt: 09.10.2014
(51) Int. Cl.: A01K 11/00

(54) **Station d'identification d'animaux et procédé d'identification correspondant**
Tieridentifikationsstation und entsprechendes Identifizierungsverfahren
Animal identification station and corresponding identification method

(30) Priorité: 15.10.2013 FR 1359996
(43) Date de publication de la demande: 22.04.2015
(73) Titulaire: Allflex Europe, 35500 Vitre (FR)
(72) Inventeur: Hilpert, Jean-Jacques, 35500 Vitre (FR)
(74) Mandataire: Vidon Brevets & Stratégie

(56) Documents cités:
- US-A- 3 952 438
- US-A1- 2008 227 662

## Description

### 1. Domaine de l'invention

Le domaine de l'invention est celui de l'identification et du marquage des animaux.

Plus précisément, l'invention concerne une station d'identification d'une série d'animaux permettant d'apposer une marque d'identification à un animal, de prélever un échantillon de l'animal, et d'identifier l'échantillon prélevé, puis de répéter ces opérations pour un autre animal.

Une telle station peut être utilisée pour identifier toute espèce animale, et en particulier pour identifier les porcelets, les volailles, ou tout animal que l'on peut facilement porter.

### 2. Art antérieur

Le document US2008/0227662 A1 divulgue une station d'identification d'animaux, comprenant des moyens de marquage des animaux, par fixation d'une marque d'identification à chaque animal, des moyens de prélèvement d'un échantillon dudit animal, et des moyens de lecture d'au moins une information d'identification portée par ladite marque d'identification. Le document US2008/0227662 A1 divulgue en outre de préenregistrer dans une base de données un numéro d'identification porté par la marque d'identification et/ou un identifiant porté par une capsule de réception d'un échantillon prélevé, et/ou de lire au moyen d'un lecteur spécifique un numéro d'identification porté par la marque d'identification et/ou un identifiant porté par la capsule, de façon à associer le numéro d'identification porté par la marque d'identification avec l'identifiant porté par la capsule.

La demande de brevet FR 2 981 242, déposée au nom de Allflex Europe, concerne une station d'identification de porcelets permettant notamment de fixer automatiquement des marques d'identification aux oreilles des porcelets, chaque marque étant formée par une partie mâle et par une partie femelle destinées à être serties à travers l'oreille d'un porcelet, insérée manuellement dans un logement dédié au sertissage.

Pour ce faire, une telle station comprend :
- des moyens de stockage d'une pluralité de parties mâles et de parties femelle,
- des moyens de commande de sertissage à travers l'oreille insérée dans le logement dédié, et
- des moyens d'exécution automatique d'un sertissage commandé, à partir d'une partie mâle et d'une partie femelle automatiquement transmis par les moyens de stockage, à travers l'oreille insérée dans le logement dédié.

Une telle station comprend de nombreux avantages.

En particulier, par rapport aux techniques manuelles nécessitant l'utilisation d'une pince pour marquer individuellement chaque animal, elle permet d'identifier rapidement un grand nombre d'animaux (de l'ordre d'un porcelet toutes les 3 secondes).

De plus, elle permet de limiter le nombre d'opérateurs requis pour effectuer l'identification d'un porcelet vis-à-vis d'un procédé entièrement manuel, puisqu'un seul utilisateur est nécessaire à l'utilisation de la station. Il suffit en effet à cet utilisateur d'introduire une oreille du porcelet dans le logement dédié au sertissage pour commander, automatiquement ou manuellement (par exemple par un appui sur une pédale, un bouton-poussoir, un levier...), l'exécution du sertissage à travers l'oreille du porcelet.

En particulier, une telle station peut notamment être utilisée pour apposer des boucles électroniques aux porcelets.

Un inconvénient d'une telle station est qu'elle n'est pas « multi-fonctions ». En d'autres termes, elle est uniquement dédiée à la pose automatique de marques d'identification.

Il existe donc un besoin pour une nouvelle station d'identification permettant notamment d'effectuer d'autres opérations que la pose automatique de marques d'identification.

### 3. Exposé de l'invention

L'invention propose une solution nouvelle qui ne présente pas l'ensemble de ces inconvénients de l'art antérieur, sous la forme d'une station d'identification d'animaux, comprenant des moyens de marquage automatique des animaux, par fixation d'une marque d'identification à chaque animal.

Selon l'invention, une telle station comprend également les moyens suivants, activés pour identifier au moins un desdits animaux :
- des moyens de prélèvement d'un échantillon dudit animal,
- des moyens de lecture d'au moins une information d'identification dudit animal portée par la marque d'identification,
- des moyens de génération d'au moins un identifiant à partir de ladite au moins une information d'identification lue par les moyens de lecture,
- des moyens d'identification de l'échantillon avec ledit au moins un identifiant.

L'invention propose ainsi une nouvelle station d'identification, permettant de réaliser au même moment et au même endroit l'ensemble des opérations de soins/identification des animaux. De ce fait, on ne traite l'animal suivant qu'une fois les opérations d'identification du premier animal terminées. On sécurise ainsi l'identification d'un animal et de l'échantillon associé à l'animal en liant, pour chaque animal, un prélèvement d'échantillon de l'animal à une information d'identification de l'animal portée par une marque d'identification de l'animal.

En particulier, l'invention permet de réaliser simplement les opérations de pose de la marque d'identification et de prélèvement d'un échantillon en utilisant toute technique connue. Notamment, l'invention permet d'associer une technique de prélèvement à une machine de pose automatique des marques d'identification, et permet plus spécifiquement d'identifier l'échantillon prélevé lorsqu'on utilise une machine de pose automatique.

On note que par « marque d'identification » on entend une marque visuelle et/ou électronique. En particulier, une marque électronique comprend notamment les boucles électroniques destinées à être apposées sur une partie externe de l'animal (comme son oreille, son aile, etc), ou les implants sous-cutanés destinés à être insérés sous la peau de l'animal, fonctionnant par exemple selon une technologie de type RFID.

L'« échantillon » prélevé peut quant à lui être de type sang, salive, poil, plume, morceau de chair, etc.

Selon un premier mode de réalisation, la station d'identification comprend des moyens d'impression dudit au moins un identifiant sur un contenant destiné à recevoir ledit échantillon, ou sur une étiquette destinée à être associée audit contenant.

De ce fait, une simple lecture « visuelle » permet d'identifier l'animal correspondant.

Selon un deuxième mode de réalisation, la station d'identification comprend des moyens de programmation d'un composant d'une étiquette électronique, aptes à stocker ledit au moins un identifiant dans ledit composant, ladite étiquette électronique étant destinée à être associée à un contenant destiné à recevoir ledit échantillon.

Par exemple, on stocke dans l'étiquette électronique les mêmes informations d'identification que celles portées par la marque d'identification fixée à l'animal.

De ce fait, une simple lecture « électronique » de l'étiquette permet d'identifier l'animal correspondant.

Une telle étiquette peut notamment fonctionner dans des hautes fréquences (HF), de l'ordre de 3 à 30 MHz, ou dans des ultra hautes fréquences (UHF), de l'ordre de 300 MHz et 3 000 MHz.

En particulier, selon ce mode de réalisation, il est possible d'utiliser une étiquette électronique existante et de programmer un composant de l'étiquette électronique pour y stocker le ou les identifiants, ou bien d'imprimer directement une étiquette portant le ou les identifiants, en utilisant par exemple une technologie à base d'éléments plans fonctionnant dans la bande UHF. Selon ce dernier exemple, l'étiquette électronique comprend au moins une antenne plane et au moins un composant plan stockant au moins un identifiant de l'animal.

Selon une variante, l'étiquette électronique prend la forme d'un implant ou d'un « glass tag » (capsule en verre).

Ainsi, quelque soit le mode de réalisation, il est possible soit d'imprimer/programmer directement le ou les identifiants sur le contenant destiné à recevoir l'échantillon, soit d'imprimer/programmer une étiquette et d'insérer cette étiquette dans le contenant, ou de solidariser cette étiquette au contenant (par exemple en la collant si l'étiquette est adhésive). Bien entendu, ces opérations peuvent être mises en oeuvre avant l'insertion de l'échantillon dans le contenant, ou après l'insertion de l'échantillon dans le contenant, manuellement ou automatiquement.

On note qu'un tel contenant est par exemple de type sachet, enveloppe, tube de prélèvement, etc.

En particulier, si le contenant est de type tube de prélèvement, il est possible d'insérer l'échantillon dans le tube de prélèvement lors de l'opération de prélèvement, et d'associer postérieurement l'étiquette au tube de prélèvement, par exemple en la collant sur le tube de prélèvement. Un tel tube de prélèvement peut également être introduit dans un contenant de type sachet ou enveloppe, portant ledit au moins un identifiant ou associé à une étiquette portant ledit au moins un identifiant.

Eventuellement, des moyens de conservation de l'échantillon ou de préparation de l'échantillon à de futures analyses peuvent être prévus dans le contenant, par exemple sous forme de gel, crème, graisse, liquide, poudre, gaz, mousse imprégnée, etc. Ces moyens peuvent notamment être préalablement insérés dans un compartiment spécifique du contenant.

Selon une caractéristique particulière de l'invention, si la marque d'identification est une marque visuelle, les moyens de lecture scannent ladite au moins une information d'identification portée par la marque visuelle et la convertissent en ledit au moins un identifiant.

Par exemple, les moyens de lecture capturent une image de ladite au moins une information d'identification portée par la marque visuelle et transfèrent cette image aux moyens d'impression, qui l'impriment sur un contenant ou sur une étiquette destinée à être associée au contenant. Selon une variante, les moyens de lecture capturent un numéro d'identification de l'animal, le convertissent en données numériques en utilisant un logiciel de type « OCR » (« Optical Character Recognition »), et les moyens d'impression impriment ce numéro d'identification (ou un autre identifiant codant ce même numéro) sur un contenant ou sur une étiquette destinée à être associée au contenant. Selon une autre variante, les moyens de lecture capturent un numéro d'identification de l'animal, le convertissent en données numériques en utilisant un logiciel de type « OCR » (« Optical Character Recognition »), et les moyens de programmation stockent ce numéro d'identification dans un composant d'une étiquette électronique destinée à être associée au contenant.

Selon une autre caractéristique particulière de l'invention, si la marque d'identification comprend un dispositif d'identification électronique, stockant ladite au moins une information d'identification, les moyens de lecture lisent ladite au moins une information d'identification stockée dans le dispositif électronique d'identification et la convertissent en ledit au moins un identifiant.

Par exemple, les moyens de lecture lisent un numéro d'identification de l'animal et transfèrent ce numéro aux moyens d'impression, qui l'impriment sur un contenant ou sur une étiquette destinée à être associée au contenant. Selon une variante, les moyens de lecture lisent un numéro d'identification de l'animal et les moyens de programmation stockent ce numéro d'identification dans un composant d'une étiquette électronique destinée à être associée au contenant.

En particulier, le ou les identifiants appartiennent au groupe comprenant :
- un code barre ;
- un code numérique ;
- un code alpha numérique;
- un code matriciel ;
- une image de ladite au moins une information d'identification portée par la marque d'identification.

Un tel identifiant est généré à partir d'une lecture des informations d'identification portées par la marque d'identification. Il peut notamment s'agir du numéro d'identification correspondant au numéro d'identification stocké dans le dispositif électronique d'identification ou imprimé sur la marque d'identification, ou une autre information permettant de coder ce même numéro.

Quelque soit la forme de cet identifiant, il doit permettre d'identifier le même animal que la marque d'identification correspondante.

Selon un aspect particulier de l'invention, la station d'identification comprend un distributeur de contenants, chaque contenant permettant de stocker un échantillon associé à un animal.

Selon une autre caractéristique de l'invention, la station d'identification comprend des moyens de fermeture sécurisée du contenant, par exemple par scellement.

Ainsi, une fois le contenant fermé, il n'est plus possible d'échanger l'échantillon ou l'étiquette (qui peut être collée sur le contenant ou insérée dans le contenant), et on assure de cette façon la cohérence entre l'échantillon prélevé et le ou les identifiants portés par l'étiquette qui lui sont associés.

On note que ces moyens de fermeture peuvent être mis en oeuvre automatiquement.

Selon encore une autre caractéristique de l'invention, la station d'identification comprend des moyens de traitement ou d'analyse de l'animal.

Par exemple, ces moyens de traitement ou d'analyse comprennent une balance, un dispositif de mesure de l'animal, un poste de vaccination, etc.

Dans un autre mode de réalisation, l'invention concerne un procédé d'identification d'animaux, mettant en oeuvre une étape de marquage automatique d'un animal, par fixation d'une marque d'identification à l'animal.

Selon l'invention, un tel procédé comprend également :
- une étape de prélèvement d'un échantillon de l'animal,
- une étape de lecture d'au moins une information d'identification de l'animal portée par la marque d'identification,
- une étape de génération d'au moins un identifiant à partir de ladite au moins une information d'identification lue lors de l'étape de lecture,
- une étape d'identification de l'échantillon avec ledit au moins un identifiant.

Un tel procédé d'identification peut notamment être mise en oeuvre dans une station d'identification telle que décrite précédemment.

Ce procédé pourra bien sûr comporter les différentes caractéristiques relatives à la station d'identification selon l'invention, qui peuvent être combinées ou prises isolément. Ainsi, les caractéristiques et avantages de ce procédé sont les mêmes que ceux de la station d'identification. Par conséquent, ils ne sont pas détaillés plus amplement.

Selon un mode de réalisation particulier de l'invention, l'étape de lecture est mise en oeuvre simultanément à une étape de traitement ou d'analyse de l'animal.

Par exemple, l'étape de lecture est mise en oeuvre simultanément à l'étape de prélèvement, ou à une étape d'injection d'une substance spécifique audit animal (par exemple, injection d'un vaccin, médicament, vitamine ou complément alimentaire, etc), ou à une étape de pesée de l'animal, ou à une étape de mesure de la taille de l'animal, etc.

On profite ainsi d'une autre opération effectuée sur l'animal pour lire les informations d'identification portée par la marque d'identification et imprimer/programmer (automatiquement) un identifiant correspondant, associé à l'échantillon.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 présente les principales étapes mises en oeuvre par une technique d'identification animale selon l'invention ;
- les figures 2 et 3 illustrent deux exemples d'étiquettes générées selon l'invention ;
- la figure 4 présente un exemple de station d'identification mettant en oeuvre les étapes de la figure 1 selon un mode de réalisation particulier de l'invention.

### 5. Description d'un mode de réalisation de l'invention

Le principe général de l'invention repose sur la mise en oeuvre d'un prélèvement d'un échantillon d'un animal et sur la mise en place automatique d'une marque d'identification sur le même animal, puis sur l'identification du prélèvement réalisé à partir d'une lecture des informations d'identification portées par la marque d'identification, de façon à sécuriser le processus d'identification de l'animal.

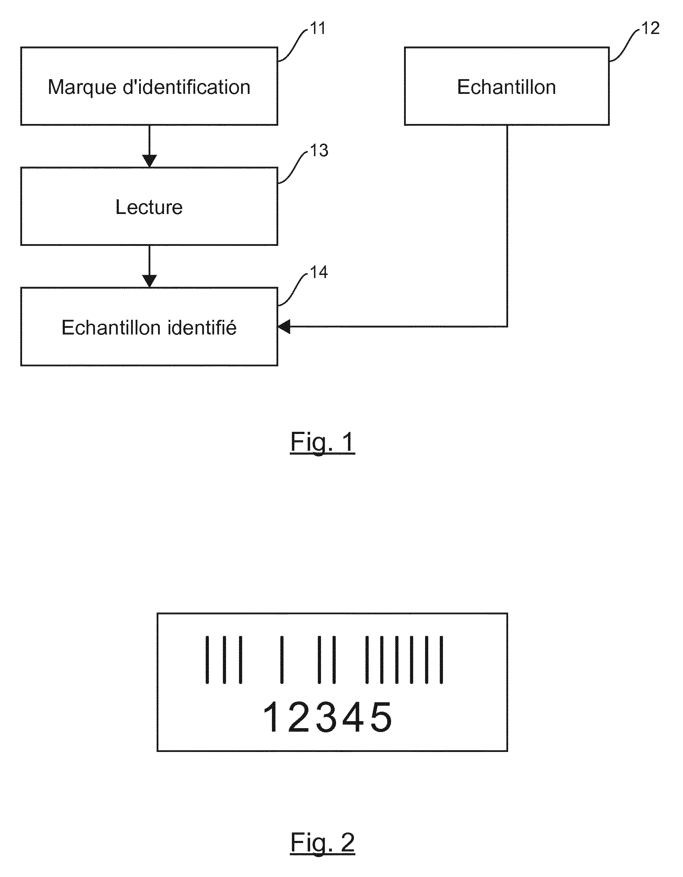

On présente plus précisément, en relation avec la figure 1, les principales étapes mises en oeuvre par une technique d'identification d'au moins un animal selon l'invention.

Plus précisément, au cours d'une première étape de marquage 11, une marque d'identification est fixée à l'animal. Une telle marque peut être visuelle (i.e. porter une ou plusieurs informations d'identification sous forme visuelle, par exemple sous la forme d'un code barre, et/ou d'un code numérique, et/ou d'un code alpha numérique, et/ou d'un code matriciel, et/ou autre), ou électronique (i.e. porter une ou plusieurs informations d'identification stockées dans un composant électronique sous forme numérique). Une marque d'identification électronique prend par exemple la forme d'un implant sous-cutané ou d'une boucle électronique apposée à l'oreille ou l'aile de l'animal notamment, fonctionnant par exemple selon la technologie RFID.

En particulier, une telle marque d'identification (visuelle et/ou électronique) peut être fixée par une machine automatique pour poser les boucles, telle que décrite par exemple dans le brevet européen EP 2 223 591 déposé au nom de Piglets Treatment System BV ou la demande de brevet français FR 2 981 242 précitée.

Au cours d'une deuxième étape de prélèvement 12, un échantillon de l'animal est prélevé. Un tel échantillon est par exemple de type salive, sang, poils, morceau de chair de l'animal (morceau d'oreille, queue, etc), etc. En particulier, un tel prélèvement peut être réalisé par tout moyen connu (prise de sang au moyen d'une seringue, récupération d'un échantillon d'oreille lors de la pose de la boucle électronique ou d'une boucle visuelle, ablation de la queue au moyen d'un coupe-queue, collecte de poils, etc).

Un tel prélèvement permet notamment de conserver des cellules/tissus portant des caractéristiques biologiques ou biochimiques de l'animal, par exemple pour identifier ultérieurement l'animal ou détecter des maladies de l'animal.

On note que ces deux étapes peuvent être mises en oeuvre simultanément ou l'une à la suite de l'autre, dans un ordre ou dans un autre.

Au cours d'une troisième étape de lecture 13, les informations d'identification de l'animal portées par la marque d'identification sont lues. Pour ce faire, on peut utiliser tout lecteur apte à lire un dispositif électronique d'identification ou à scanner/capturer des informations d'identification présentes sous forme visuelle.

De manière avantageuse, cette étape de lecture est effectuée après la fixation de la marque d'identification à l'animal, afin d'éviter tout risque de mélange des marques d'identification. Ceci permet notamment d'augmenter la fiabilité du processus d'identification.

En particulier, elle peut être effectuée simultanément à une autre action nécessitant d'immobiliser l'animal sur une courte période, comme l'administration d'un médicament, vaccin, ou autre substance, le prélèvement de l'échantillon, la pesée de l'animal, la mesure de l'animal, etc.

On note également que, en variante, cette étape de lecture peut être mise en oeuvre préalablement à la fixation de la marque d'identification à l'animal.

Au cours d'une quatrième étape 14, au moins un identifiant est généré à partir de la ou des informations d'identification lue lors de l'étape de lecture 13. Un tel identifiant est utilisé pour identifier l'échantillon.

Par exemple, au moins un identifiant de l'animal est imprimé sur un contenant destiné à recevoir l'échantillon ou sur une étiquette « papier » destinée à être associée au contenant. Le contenant ou l'étiquette porte alors un ou plusieurs identifiants de l'animal sous forme visuelle, par exemple sous la forme d'un code barre, et/ou d'un code numérique, et/ou d'un code alpha numérique, et/ou d'un code matriciel, et/ou d'une image (noir et blanc, ou couleur) des informations d'identification portées par la marque d'identification. Un tel exemple d'étiquette comprenant un code barre et un code numérique est illustré en figure 2.

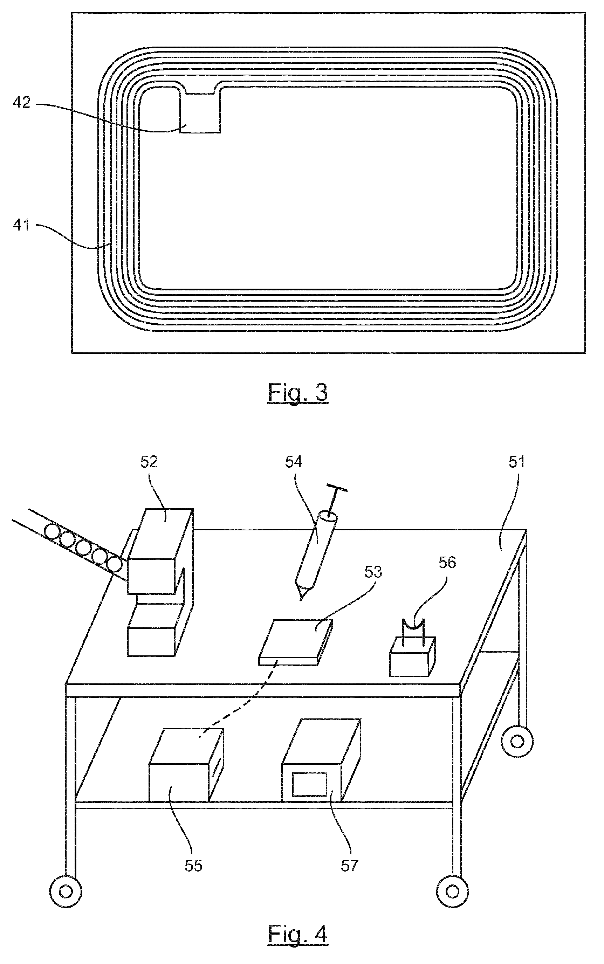

Selon un autre exemple, le ou les identifiants de l'animal sont programmés sous forme électronique, dans une mémoire. Une telle étiquette est encore appelée étiquette électronique, et peut par exemple fonctionner dans des bandes HF ou UHF. Par exemple, comme illustré en figure 3, une telle étiquette est conçue en utilisant des éléments plans souples, comme une antenne plane UHF 41 et un composant électronique plan 42 stockant l'identifiant. En particulier, l'antenne plane UHF et le composant électronique plan peuvent être imprimés directement sur un film plastique souple ou une feuille de papier. Selon une variante, l'antenne plane UHF et le composant électronique plan sont découpés dans une feuille de cuivre et collés sur un film plastique souple ou une feuille de papier. Selon encore une autre variante, l'antenne plane UHF et le composant électronique plan peuvent être imprimés directement sur le contenant.

On note que ces différentes informations, visuelles ou électroniques, permettent d'identifier un même animal.

Si le ou les identifiants de l'animal sont imprimés/programmés sur une étiquette, on colle l'étiquette à un tube de prélèvement contenant l'échantillon, ou on insère l'échantillon dans un contenant (par exemple un sachet ou une enveloppe) et on colle l'étiquette sur le contenant.

Selon une variante, on insère l'échantillon dans un contenant (par exemple un sachet ou une enveloppe) et on insère l'étiquette directement dans le contenant.

Selon encore une autre variante, on colle l'étiquette sur ou on insère l'étiquette dans le contenant préalablement à l'insertion de l'échantillon dans le contenant.

Le contenant peut alors être fermé de façon sécurisée, par exemple scellé, pour être transmis à un laboratoire.

On note qu'un contenant ou tube de prélèvement selon ces deux variantes peut notamment être rempli d'une substance spécifique permettant de préparer l'échantillon à une analyse ultérieure ou d'améliorer sa conservation.

On obtient donc, à l'issue de ces étapes, un contenant comprenant un échantillon et au moins un identifiant pour identifier un même animal.

Ces différentes étapes peuvent alors être répétées pour identifier d'autres animaux.

On présente désormais, en relation avec la figure 4, un exemple de station d'identification mettant en oeuvre la technique d'identification décrite ci-dessus.

Plus précisément, la figure 4 illustre un exemple de station d'identification 51 mettant en oeuvre une machine de pose de boucles en automatique 52, utilisée par exemple pour l'identification de porcelets.

Une telle machine 52 est alimentée par des boucles visuelles et/ou électroniques, éventuellement reliées entre elles sous la forme d'une guirlande de boucles.

Selon le type d'animal à identifier, ces boucles peuvent être formées d'une partie mâle uniquement, ou d'une paire partie mâle-partie femelle. Une telle machine 52 comprend donc au moins un magasin d'alimentation en parties mâles et/ou en parties femelles, tel que les différentes parties puissent coulisser dans le magasin au fur et à mesure de leur utilisation. En particulier, une telle machine comprend des moyens permettant de détecter automatiquement la présence d'une oreille d'un animal, de façon à déclencher automatiquement l'opération de pose de la boucle lorsque l'on détecte la présence de l'oreille du porcelet.

Une telle station d'identification est également équipée de moyens de lecture 53, fixes ou amovibles, permettant de lire des informations d'identification portées par la marque d'identification.

Comme déjà indiqué en relation avec la figure 1, la lecture de ces informations d'identification peut être effectuée simultanément à une autre opération, comme l'opération de prélèvement d'un échantillon de l'animal, l'injection d'une substance spécifique à l'animal (par exemple un médicament, un vaccin, une vitamine, etc), par exemple au moyen d'une seringue 54, la pesée de l'animal, la mesure de l'animal, etc.

Ces informations d'identification sont alors transmises à un générateur d'étiquettes 55, qui délivre une étiquette portant au moins un identifiant de l'animal, sous forme visuelle et/ou électronique, comme décrit ci-dessus. En variante, le générateur d'étiquettes 55 peut être remplacé par une imprimante imprimant le ou les identifiants directement sur le contenant.

Une telle station d'identification est également munie de moyens de prélèvement d'un échantillon de l'animal, prenant par exemple la forme d'un coupe-queue électrique 56. Un tel coupe-queue électrique permet notamment de couper la queue des porcelets et de cautériser la plaie au niveau de la coupure.

La queue du porcelet ainsi coupée et l'étiquette associée peuvent tomber directement dans un sachet distribué par une ensacheuse 57, puis le sachet peut être fermé de façon hermétique, par exemple par sertissage.

En variante, l'étiquette peut être automatiquement collée sur le sachet contenant la queue du porcelet, ou préalablement à l'insertion de la queue du porcelet dans le sachet.

Selon une autre variante, la queue du porcelet ainsi coupée peut tomber directement dans un sachet sur lequel est imprimé le ou les identifiants, puis le sachet peut être fermé de façon hermétique.

Selon d'autres variantes, les opérations d'insertion de la queue du porcelet dans le sachet et d'insertion ou de collage de l'étiquette sur le sachet peuvent être réalisées manuellement.

Le sachet peut alors être fermé pour transmission à un laboratoire d'analyse.

En d'autres termes, selon cet exemple de réalisation, du fait que l'animal (porcelet, volaille, ou autre animal que l'on peut porter) soit équipé d'une marque d'identification, la réalisation d'une autre opération sur l'animal (comme une vaccination par exemple) permet de lire la marque d'identification et de déclencher l'identification de l'échantillon prélevé (ou plus précisément de son contenant).

On note qu'un intérêt d'une telle station est qu'elle permet de réaliser au même moment et au même endroit l'ensemble des opérations de soins/identification des animaux. De ce fait, on ne traite l'animal suivant qu'une fois les opérations d'identification du premier animal terminées. On sécurise ainsi l'identification de l'animal et de l'échantillon associé à l'animal.

De plus, dans le cas où l'étiquette générée comprend une information visuelle, on peut s'assurer par simple vérification visuelle que l'échantillon prélevé est correctement identifié.

Finalement, on note qu'une telle station peut être munie de roulettes de façon à pouvoir la déplacer plus facilement au sein de la porcherie. Elle peut également être portative. Par ailleurs, elle peut être réglable en hauteur, ou être équipée de tout élément permettant de faciliter les opérations d'identification et de soins pour les utilisateurs.

## Revendications

1. Station d'identification d'animaux, comprenant des moyens de marquage (52) automatique des animaux, par fixation d'une marque d'identification à chaque animal,
- des moyens de prélèvement (56) d'un échantillon dudit animal,
- des moyens de lecture (53) d'au moins une information d'identification portée par ladite marque d'identification,
**caractérisée en ce que** ladite station comprend également les moyens suivants, activés pour identifier au moins un desdits animaux:
- des moyens de génération (55) d'au moins un identifiant à partir de ladite au moins une information d'identification lue par lesdits moyens de lecture, et
- des moyens d'identification dudit échantillon avec ledit au moins un identifiant.

2. Station d'identification selon la revendication 1, **caractérisé en ce qu'**elle comprend des moyens d'impression dudit au moins un identifiant sur un contenant destiné à recevoir ledit échantillon, ou sur une étiquette destinée à être associée audit contenant.

3. Station d'identification selon la revendication 1, **caractérisé en ce qu'**elle comprend des moyens de programmation d'un composant d'une étiquette électronique, aptes à stocker ledit au moins un identifiant dans ledit composant, ladite étiquette électronique étant destinée à être associée à un contenant destiné à recevoir ledit échantillon.

4. Station d'identification selon l'une quelconque des revendications 1 à 3, **caractérisé en ce que** ladite marque d'identification est une marque visuelle, et **en ce que** lesdits moyens de lecture scannent ladite au moins une information d'identification portée par ladite marque visuelle et la convertissent en ledit au moins un identifiant.

5. Station d'identification selon l'une quelconque des revendications 1 à 3, **caractérisé en ce que** ladite marque d'identification comprend un dispositif d'identification électronique, stockant ladite au moins une information d'identification, et **en ce que** lesdits moyens de lecture lisent ladite au moins une information d'identification stockée dans ledit dispositif électronique d'identification et la convertissent en ledit au moins un identifiant.

6. Station d'identification selon l'une quelconque des revendications 1 à 5, **caractérisée en ce que** ledit au moins un identifiant appartient au groupe comprenant :
- un code barre ;
- un code numérique ;
- un code alpha numérique;
- un code matriciel ;
- une image de ladite au moins une information d'identification portée par ladite marque d'identification.

7. Station d'identification selon l'une quelconque des revendications 1 à 6, **caractérisée en ce qu'**elle comprend un distributeur de contenants (57), chaque contenant permettant de stocker un échantillon associé à un animal.

8. Station d'identification selon la revendication 7, **caractérisée en ce qu'**elle comprend des moyens de fermeture sécurisée desdits contenants.

9. Station d'identification selon l'une quelconque des revendications 1 à 8, **caractérisée en ce qu'**elle comprend des moyens de traitement (54) ou d'analyse dudit animal.

10. Station d'identification selon l'une quelconque des revendications 1 à 9, **caractérisée en ce que** lesdits moyens de prélèvement (56) comprennent un coupe-queue électrique.

11. Procédé d'identification d'animaux, mettant en oeuvre une étape de marquage (11) automatique d'un animal, par fixation d'une marque d'identification audit animal,
- une étape de prélèvement (12) d'un échantillon dudit animal,
- une étape de lecture (13) d'au moins une information d'identification dudit animal portée par ladite marque d'identification,
**caractérisé en ce que** ledit procédé comprend également:
- une étape de génération (14) d'au moins un identifiant à partir de ladite au moins une information d'identification lue lors de ladite étape de lecture, et d'identification dudit échantillon avec ledit au moins un identifiant.

12. Procédé d'identification selon la revendication 11, **caractérisé en ce que** ladite étape de lecture (13) est mise en oeuvre simultanément à une étape de traitement ou d'analyse dudit animal.

## Patentansprüche

1. Tieridentifizierungsstation, umfassend ein Mittel zur automatischen Kennzeichnung (52) von Tieren durch Befestigung einer Identifizierungsmarke an jedem Tier,
- ein Mittel zur Entnahme (56) einer Probe des Tiers und
- ein Mittel zum Auslesen (53) mindestens einer Identifizierungsinformation, die von der Identifizierungsmarke getragen wird,
**dadurch gekennzeichnet, dass** die Station zudem folgende Mittel umfasst, welche zur Identifizierung mindestens eines der Tiere betätigt werden:
- ein Mittel zur Erzeugung (55) mindestens eines Identifikators ausgehend von der mindestens einen Identifizierungsinformation, die von dem Mittel zum Auslesen ausgelesen wird, und
- ein Mittel zur Identifizierung der Probe mit dem mindestens einen Identifikator.

2. Identifizierungsstation nach Anspruch 1, **dadurch gekennzeichnet, dass** sie ein Mittel zum Drucken des mindestens einen Identifikators auf ein Behältnis, das für die Aufnahme der Probe vorgesehen ist, oder auf ein Etikett, das zur Verbindung mit dem Behältnis vorgesehen ist, umfasst.

3. Identifizierungsstation nach Anspruch 1, **dadurch gekennzeichnet, dass** sie ein Mittel zur Programmierung einer Komponente eines elektronischen Etiketts umfasst, welches zur Speicherung des mindestens einen Identifikators in der Komponente geeignet ist, wobei das elektronische Etikett zur Verbindung mit einem Behältnis vorgesehen ist, das für die Aufnahme der Probe vorgesehen ist.

4. Identifizierungsstation nach einem der Ansprüche 1 bis 3, **dadurch gekennzeichnet, dass** die Identifizierungsmarke eine visuelle Marke ist, und dadurch, dass das Mittel zum Auslesen die mindestens eine Identifizierungsinformation, die von der visuellen Marke getragen wird, abtastet und sie in den mindestens einen Identifikator umwandelt.

5. Identifizierungsstation nach einem der Ansprüche 1 bis 3, **dadurch gekennzeichnet, dass** die Identifizierungsmarke eine elektronische Identifizierungsvorrichtung umfasst, welche die mindestens eine Identifizierungsinformation speichert, und dadurch, dass das Mittel zum Auslesen die mindestens eine Identifizierungsinformation, die in der elektronischen Identifizierungsvorrichtung gespeichert wird, ausliest und sie in den mindestens einen Identifikator umwandelt.

6. Identifizierungsstation nach einem der Ansprüche 1 bis 5, **dadurch gekennzeichnet, dass** der mindestens eine Identifikator der Gruppe umfassend:
- einen Strichcode;
- einen numerischen Code;
- einen alphanumerischen Code;
- einen Matrixcode;
- ein Bild der mindestens einen Identifizierungsinformation, die von der Identifizierungsmarke getragen wird,
angehört.

7. Identifizierungsstation nach einem der Ansprüche 1 bis 6, **dadurch gekennzeichnet, dass** sie einen Behältnisspender (57) umfasst, wobei jedes Behältnis die Lagerung einer einem Tier zugehörigen Probe erlaubt.

8. Identifizierungsstation nach Anspruch 7, **dadurch gekennzeichnet, dass** sie ein Mittel für den sicheren Verschluss der Behältnisse umfasst.

9. Identifizierungsstation nach einem der Ansprüche 1 bis 8, **dadurch gekennzeichnet, dass** sie ein Mittel zur Behandlung (54) oder zur Analyse des Tiers umfasst.

10. Identifizierungsstation nach einem der Ansprüche 1 bis 9, **dadurch gekennzeichnet, dass** das Mittel zur Entnahme (56) einen elektrischen Schwanzkupierer umfasst.

11. Tieridentifizierungsverfahren, welches einen Schritt zur automatischen Kennzeichnung (11) eines Tiers durch Befestigung einer Identifizierungsmarke an dem Tier,
- einen Schritt zur Entnahme (12) einer Probe des Tiers und
- einen Schritt zum Auslesen (13) mindestens einer Identifizierungsinformation des Tiers, die von der Identifizierungsmarke getragen wird,
umsetzt,
**dadurch gekennzeichnet, dass** das Verfahren zudem:
- einen Schritt zur Erzeugung (14) mindestens eines Identifikators ausgehend von der mindestens einen Identifizierungsinformation, die während des Schritts zum Auslesen ausgelesen wird, und zur Identifizierung der Probe mit dem mindestens einen Identifikator
umfasst.

12. Identifizierungsverfahren nach Anspruch 11, **dadurch gekennzeichnet, dass** der Schritt zum Auslesen (13) zeitgleich mit einem Schritt der Behandlung oder Analyse des Tiers umgesetzt wird.

## Claims

1. An animal identification station, comprising means (52) for automatic marking of the animals, by attaching an identifying mark to each animal,
- means (56) for taking a sample from said animal, and
- means (53) for reading at least one piece of identifying information carried by said identifying mark,
**characterised in that** said station also comprises the following means, activated to identify at least one of said animals:
- means (55) for generating at least one identifier from said at least one piece of identifying information read by said reading means, and
- means for identifying said sample with said at least one identifier.

2. The identification station according to Claim 1, **characterised in that** it comprises means for printing said at least one identifier on a container intended to receive said sample, or on a label intended to be associated with said container.

3. The identification station according to Claim 1, **characterised in that** it comprises means for programming a component of an electronic label, capable of storing said at least one identifier in said component, said electronic label being intended to be associated with a container intended to receive said sample.

4. The identification station according to any of Claims 1 to 3, **characterised in that** said identifying mark is a visual mark, and **in that** said reading means scan said at least one piece of identifying information carried by said visual mark and convert it into said at least one identifier.

5. The identification station according to any of Claims 1 to 3, **characterised in that** said identifying mark comprises an electronic identification device, storing said at least one piece of identifying information, and **in that** said means for reading read said at least one piece of identifying information stored in said electronic identification device and convert it into said at least one identifier.

6. The identification station according to any of Claims 1 to 5, **characterised in that** said at least one identifier belongs to the group comprising:
- a bar code;
- a digital code;
- an alphanumeric code;
- a matrix code;
- an image of said at least one piece of identifying information carried by said identifying mark.

7. The identification station according to any of Claims 1 to 6, **characterised in that** it comprises a container distributor (57), each container allowing the storage of a sample associated with an animal.

8. The identification station according to Claim 7, **characterised in that** it comprises means for securely closing said containers.

9. The identification station according to any of Claims 1 to 8, **characterised in that** it comprises means (54) for processing or analysing said animal.

10. The identification station according to any of Claims 1 to 9, **characterised in that** said means (56) for sampling comprise an electric docking iron.

11. A method of identification of animals, implementing an automatic step (11) of marking an animal, by attaching an identifying mark to said animal,
- a step (12) of taking a sample from said animal, and
- a step (13) of reading at least one piece of identifying information of said animal carried by said identifying mark,
**characterised in that** said method also comprises:
- a step (14) for generating at least one identifier from said at least one piece of identifying information read during the reading step, and for identifying said sample with said at least one identifier.

12. The method of identification according to Claim 11, **characterised in that** said reading step (13) is implemented simultaneously with a step for processing or analysing said animal.
